# EUROPEAN PATENT SPECIFICATION

(11) **EP 1 104 132 B1**
(45) Date of publication and mention of the grant of the patent: **14.04.2004**
(21) Application number: 99123168.9
(22) Date of filing: 23.11.1999
(51) Int. Cl.: H04L 12/24

(54) **Automated configuration of internet-like computer networks**
Automatische Konfiguration eines Internet - artigen Computernetzes
Configuration automatique de réseaux de type Internet

(43) Date of publication of application: 30.05.2001
(73) Proprietor: Northrop Grumman Corporation, Los Angeles, CA 90067-2199 (US)
(72) Inventor: Bixler, David C., Hermosa Beach, CA 90254 (US); Hilger, Eufemia P., San Pedro, CA 90731 (US); Smith, Jeffrey A., Albuquerque, NM 87109 (US); Wittlin, Mark R., Pleasant Hill, CA 94523-4708 (US); Siegel, Neil G., Rancho Palos Verdes, CA 90274 (US)
(74) Representative: Schmidt, Steffen J., Dipl.-Ing.

(56) References cited:
- EP-A- 0 797 330
- EP-A- 0 889 656
- US-A- 5 889 954
- "DYNAMIC LAN RECONFIGURATION MECHANISM" IBM TECHNICAL DISCLOSURE BULLETIN,US,IBM CORP. NEW YORK, vol. 37, no. 11, 1 November 1994 (1994-11-01), pages 407-410, XP000487282 ISSN: 0018-8689
- SOMERS F ET AL: "INTELLIGENT RESOURCE DIMENSIONING IN ATM NETWORKS" PROCEEDINGS OF THE INTERNATIONAL SWITCHING SYMPOSIUM,DE,BERLIN, VDE VERLAG, vol. SYMP. 15, 1995, pages 62-66, XP000495626 ISBN: 3-8007-2093-0

## Description

### BACKGROUND OF THE INVENTION

This invention relates generally to computer networks and, more particularly, to techniques for configuring large interconnected networks to enable proper routing of messages to their intended destinations. The interconnection of many local area networks (LANs) and larger networks, sometimes referred to as wide area networks (WANs), is now a relatively well understood concept in most business, educational and government organizations. Computers may be interconnected through telephone lines, coaxial cables, optical fibers, radio or microwave communication links, earth-orbiting satellites, or other means.

In a large interconnected computer network, such as the Internet, computers may be categorized by the principal functions they perform. For example, there are user computers that function as network nodes or stations, sometimes referred to as host computers, which send and receive messages over a network in the form of packets of data. Other computers function as servers, and distribute requested data to network users with host computers. Computers in another category function solely to route data packets or messages from one part of the network to another. These are known by various names suggestive of the specific functions they perform, such as bridges, routers, switches and gateways. A bridge is a device that is connected to at least two LANs and serves to pass message frames or packets between the LANs, such that a source station on one LAN can transmit data to a destination station on another LAN without concern for the location of the destination. A bridge "listens" to messages from every LAN to which it is connected and relays the message onto all the other LANs to which it is connected. Routers perform an analogous function but make use of a network identifier in a message destination address to determine an optimum path for the message.

Every network station or node has both a physical address and a logical address. The physical address is a unique numerical or other code that uniquely defines the station and the local network to which it is connected. The logical address is usually a name or label associated with the station or the person using it. The logical address, which may include a person's name, is the address other users employ to direct messages to the person without having to remember or look up a long and complicated physical address.

In any large organization with many interconnected computers, whether it be a business, educational or military organization, proper routing of data messages from one network station to another depends largely on having the network accurately configured. That is to say, each network station or host must have its hardware address properly set up and each router or other message routing computer must be properly programmed to reflect exactly the physical locations of the stations in the network, the relationships between the physical and logical addresses, and the interconnection paths between all the computers and interconnected LANs in the network. This configuration process is conventionally performed manually, typically by technicians or system administrative personnel.

As interconnected networks become more complex, it also becomes more difficult to ensure that every network component has been correctly configured. The principal reason that manual network configuration is tolerated in large organizations is that in many cases the network configuration is relatively static, and the required changes are small and incremental. When a new employee joins the network or changes physical locations, it is a relatively simple matter to reconfigure the network to include his or her computer in the appropriate new location. Extensive corporate reorganizations are typically infrequent and there is usually adequate warning to make the necessary configuration changes.

A more difficult problem is presented when frequent changes are needed in the network configuration. One example is a military communication network in which many of the computer stations are mobile and reconfiguration may be needed on a daily or even more frequent basis during military maneuvers. In this case, there is simply not enough time for manual reconfiguration of a large interconnected network of computers.

EP 0 889 656 A2 discloses a method and apparatus for controlling admission of communication signal data to a communications network with a plurality of nodes, each node comprising a switch configured to accept communications connections across the network from users attached to the switch in accordance with a policy data table stored locally in the switch. Each switch stores a number of policy data tables, wherein the switch may select anyone of its stored policy data tables under control of a local selection algorithm, and wherein the switch is configured to operate an active policy data table for a predetermined operating period, which can be set at the switch or which can be set by a network controller. Upon operation each switch generates a current status data table representing the current performance of that switch operating under its currently active policy data table and transmits the currently active policy data table as well as the current status data table to the network controller. The network controller then determines new policy data tables from the currently active data tables transmitted by the switches and generates simulated status data describing the performance which could be expected on the real network, if the new policy data tables where implemented in the real network. The simulated status data tables are used to select individual new policy data tables for sending out to the switches of the real network. The selected new data tables then are distributed to the switches of the network by the network controller.

Accordingly, there is a significant need for an automated process to reconfigure large computer networks, such as wireless military networks. Even in a commercial setting where there is usually enough time to reconfigure networks when changes occur, there is a need for a technique that would effect network reconfiguration more quickly and reliably than by manual means. The present invention satisfies this need and provides a number of other related advantages.

### SUMMARY OF THE INVENTION

The present invention resides in a system and a related method according to claims 1 and 9.

In one embodiment of the invention, the triggering signal is generated by a clock in each computer and the conditioning step conditions the network computers to switch to the new configuration at a prearranged time. Alternatively, the triggering signal is generated by a command transmitted to the network computers over the network.

According to the invention, the planning step includes specifying a task organization that defines functional interrelationships between users of network computer stations; specifying a platform equipment definition for each network computer station; specifying at least one logical network configuration that defines the interrelationships between network computer stations; automatically converting each logical network configuration to a corresponding physical network configuration; and automatically generating from the physical network configuration a network operational database that completely defines the network and a plurality of management information blocks containing data to be used to program message routing computers in the network. The disseminating step includes transmitting the management information blocks over the network to message routing computers to which the blocks pertain. The conditioning step is then performed in each message routing computer in response to receipt of a management information block.

The method may further comprise the step of generating reports pertaining to the task organization, platform equipment, and logical network configuration defined in the specifying steps, and pertaining to the physical network configuration.

The planning step may further include the step of developing an Internet address book from the data generated during the specifying steps.

In accordance with another feature of the invention, the planning step further includes automatically detecting any errors made in the specifying steps; reporting any detected errors; and repeating the specifying steps until any detected and reported errors are eliminated.

The invention may also be defined as a system for configuring a communication network of multiple interconnected computers, some of which perform a message routing function. In its broadest terms, the system comprises a graphical user interface module facilitating specification of a network by an authorized user; a network planning module, coupled to the graphical user interface module and functioning to allow the authorized user to define various aspects of a network of computers; means for generating network programming data corresponding to a new configuration specified in the network planning module; means for disseminating the network programming data over an existing communication network; means for conditioning computers in the network to switch to the new configuration on the occurrence of a triggering signal; and means for switching to the new configuration upon occurrence of the triggering signal.

In accordance with one alternative, the triggering signal is generated by a clock in each computer and the means for conditioning conditions the network computers to switch to the new configuration at a prearranged time. In an alternative approach, the means for switching includes means for generating a triggering signal that is transmitted to the network computers over the network.

According to the invention the network planning module includes a task organization development module coupled to the graphical user interface module and functioning to allow the authorized user to define functional interrelationships between users of network computer stations; a platform equipment development module coupled to the graphical user interface module and functioning to allow the authorized user to define equipment parameters for each network computer station; a logical communication network development module coupled to the graphical user interface module and functioning to allow the authorized user to specify at least one logical network configuration that defines the interrelationships between network computer stations; means for automatically converting each logical network configuration to a corresponding physical network configuration; and means for automatically generating from the physical network configuration a network operational database that completely defines the network and a plurality of management information blocks containing data to be used to program message routing computers in the network.

Further, the means for disseminating includes means for transmitting the management information blocks over the network to message routing computers to which the blocks pertain, and the means for conditioning is located in each message routing computer and operates in response to receipt of a management information block.

The system may further comprise means for generating reports pertaining to the task organization, platform equipment, and logical network configuration defined in the development modules, and pertaining to the means for automatically generating a physical network configuration.

The network planning module may further include an Internet address book development module using data generated in the task organization development module, the platform equipment development module and the logical communication network development module.

The network planning module may further include means for automatically detecting any errors made in the development modules; means for reporting any detected errors; and means for repeatedly operating the development modules until any detected and reported errors are eliminated.

It will be appreciated from the foregoing that the present invention represents a significant advance in the field of communication networks. In particular, the invention provides a technique that facilitates user specification of network configuration changes, and then automatically converts the user's specifications to a new physical network configuration. Then, under user control, the system of the invention transmits configuration changes to all affected computers in the network, which are automatically conditioned to switch to a new configuration at a prearranged time or upon the receipt of a command signal. Other aspects and advantages of the invention will become apparent from the following more detailed description, taken in conjunction with the accompanying drawings.

### BRIEF DESCRIPTION OF THE DRAWINGS

FIG. 1 is a block diagram showing inputs to and outputs from a network configuration tool in accordance with the present invention;
FIG. 2 is block diagram showing the principal functional modules of the network configuration tool in its planning phase, dissemination and execution phase of operation;
FIGS. 3A and 3B together comprise a block diagram depicting process flow in the planning phase of operation of the network configuration tool;
FIG. 4 is a screen image of user interface main menu in an implementation of the network configuration tool;
FIG. 5 is a screen image of a user interface for graphical task organization in the network configuration tool;
FIG. 6 is a screen image similar to FIG. 5 but showing tabular task organization;
FIG. 7 is a screen image of a user interface defining a unit of the network;
FIG. 8 is a screen image of a user interface defining logical communication nets in tabular form;
FIG. 9A is a screen image of a user interface defining logical communication nets in graphical;
FIG. 9B is a screen image of a user interface showing communication net selection to obtain a display such as those in FIGS. 8 and 9A;
FIG. 10 is a screen image of a user interface similar to FIG. 9A, depicting communication nets in a different graphical form;
FIG. 11 is a screen image of a user interface, showing a tabular listing of network platforms (vehicles);
FIG. 12A is a screen image of a user interface depicting network platforms in graphical form;
FIG. 12B is a screen image of a user interface showing platform selection to obtain a display such as those in FIGS. 11 and 12A;
FIG. 13 is a screen image of a user interface similar to FIG. 12A, depicting network platforms in different graphical form;
FIGS. 14 is a screen image of a user interface, defining a network unit in graphical form, and showing an overlaid screen image with details of a platform selected in the graphical display;
FIG. 15 is a screen image of a user interface showing a main report generating menu;
FIGS. 16A and 16B are screen images of a user interface showing a units hierarchy report and a units/platforms hierarchy report, respectively;
FIGS. 17A and 17B are screen images of a user interface showing a nets/net members report and a platforms/nets report, respectively; and
FIGS. 18A and 18B are screen images of a user interface showing address books of nets and platforms, respectively.

### DESCRIPTION OF THE PREFERRED EMBODIMENT

As shown in the drawings for purposes of illustration, the present invention pertains to techniques for configuring or reconfiguring a large network of interconnected computers. Computer networks must be accurately programmed to reflect the locations and identities of all of its components and the topology of its interconnections. Conventionally, various items of configuration data are entered manually into each computer. Not only is this time consuming and subject to error, but rapid reconfiguration to reflect changes in location, identity or network topology may not be readily achievable to meet user requirements in some networks.

In accordance with the present invention, a network administrator can configure or reconfigure the network from a host computer connected to the network, using a graphical interface to specify logical and topographical relationships among network computers and their users. The network configuration tool then generates all the necessary parameters of a corresponding logical communication network and a physical communication network. Under control of the network administrator, new network parameters are disseminated to the various computers in the network, all of which are instructed to switch to the new parameters at a common prearranged time, or when a single command signal is received.

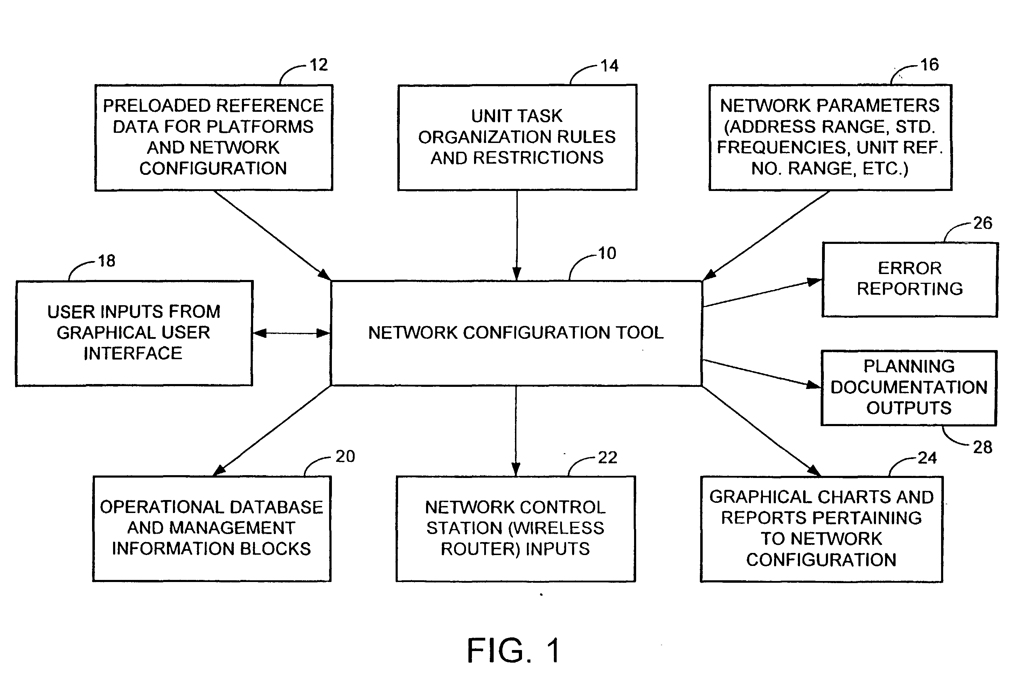

FIG. 1 shows the principle input and output data items pertaining to the network configuration tool 10 of the present invention. First the configuration tool 10 uses preloaded reference data for network configuration and platforms, as indicated in block 12. In this specification, the term "platform" is used to define the working environment of a network computer. In some contexts, where network computers are portable, the "platform" data may pertain to a vehicle, such as an automobile, an armored tank, a ship or an aircraft. In the context of conventional desk-top computers, the "platform" data may define the computer location in terms of a building and room identification.

Another major type of network configuration tool inputs is a set of unit task organization rules and restrictions, as indicated in block 14. A "unit" is a single entity in an organizational structure. The "unit task organization" is the overall organizational plan by which units are grouped and interrelated according to the tasks they perform. In a military organization, units may include such entities as divisions, brigades, companies, fleets, ships, aircraft groups and so forth. In a business context, units include such entities as corporations, groups, sectors, divisions, branches, departments, and individuals with various job titles. Similarly, organizational units with other appropriate names are used in governmental and educational organizations.

Every unit task organization has its own particular rules and restrictions pertaining to how the units may be interrelated. For example, a corporation president would not report to a department manager. The network configuration tool 10 allows a specially authorized user to configure or reconfigure a computer network, but only within the organization rules and restrictions input from block 14.

A third general category of inputs to the network configuration tool 10 encompasses network parameters, as indicated in block 16. These are physical parameters of the network, such as station address ranges, standard transmission frequencies for wireless networks, an acceptable range of unit reference numbers, and so forth. The configuration tool 10 needs to have this information when assigning new units to or moving existing units in a network.

An important fourth category of inputs comes from a user of the network configuration tool 10, through a graphical interface, as indicated in block 18. The user supplies input data and commands pertaining to the configuration changes that are being requested. Changes in task organization units, platform assignments and logical communication networks are input through the graphical interface. The user interface is interactive, with the user receiving error messages if, for example the requested changes are contrary to the unit task organization rules and restrictions, and receiving confirmation if the requested changes are accepted.

The network configuration tool 10 generates a new or modified operational database that reflects all the changes made by the user and also outputs management information blocks, as indicated in block 20. The management information blocks contain data for reconfiguring individual computers in the network in accordance with the new configuration. The blocks are in a standard format that enables them to be transmitted to and implemented by computers in the network.

For networks employing wireless routers, the network configuration tool 10 also outputs network control station input data in a standard format for transmission to wireless routers, as indicated in block 22. Finally, the network configuration tool 10 is capable of generating a variety of graphical charts and reports pertaining to the reconfigured network configuration, as indicated in block 24.

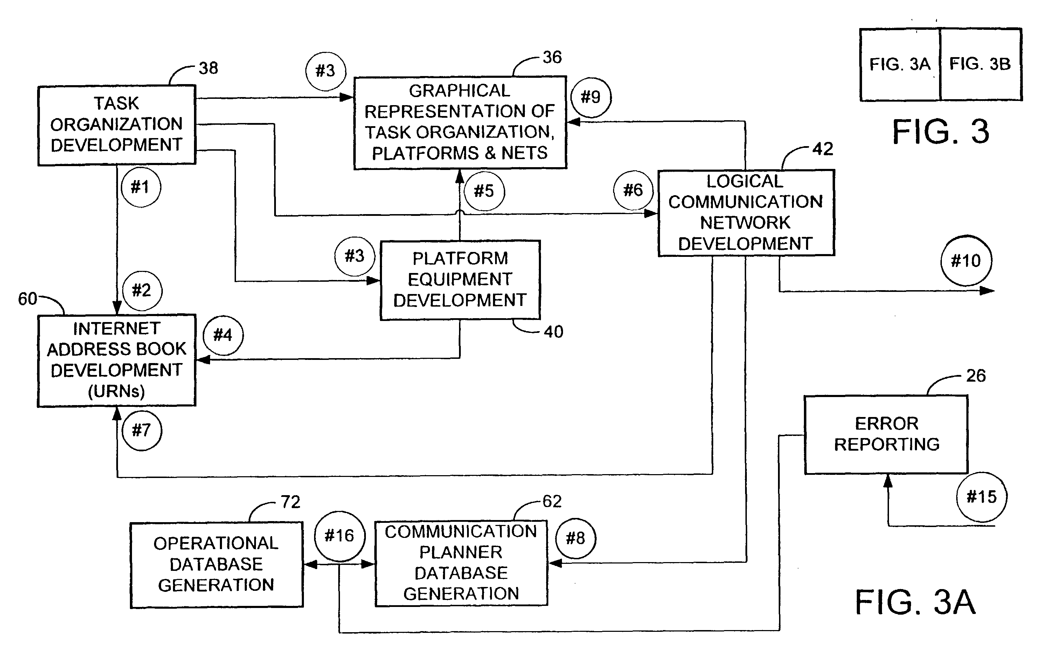

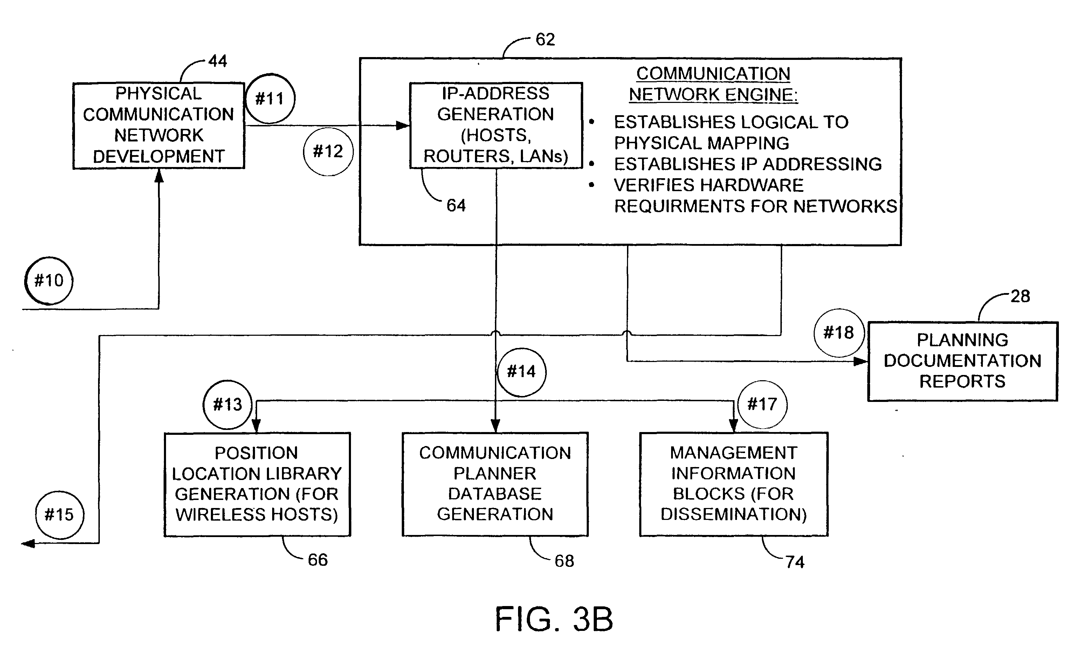

In addition to the functions described above, the network configuration tool 10 also performs an error reporting function, as indicated in block 26, which is further discussed below with reference to FIG. 3A. The network configuration tool 10 also provides planning documentation outputs, as indicated in block 28, which is further discussed below with reference to FIG. 3B.

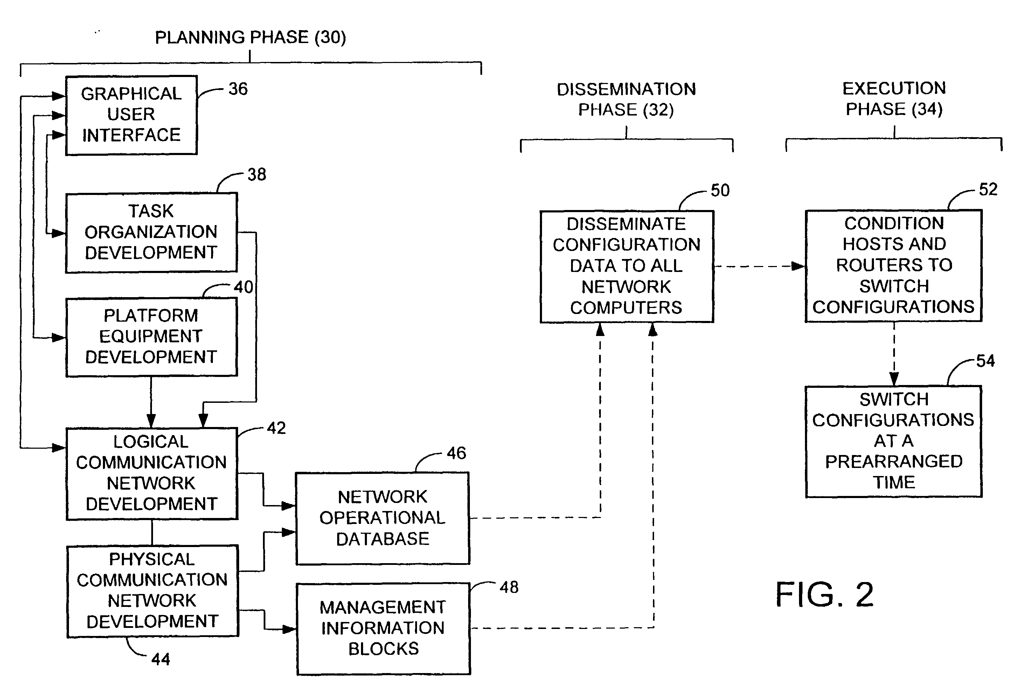

FIG. 2 shows the principal functions performed by the network configuration tool 10. The network configuration tool operates in three distinct phases: a planning phase 30, a dissemination phase 32 and an execution phase 34. In the planning phase, a graphical user interface 36 provides input data to three functional modules: a task organization development module 38, a platform equipment development module 40 and a logical communication network development module 42. Inherent in the operation of these three modules, although not shown in FIG. 2, is the input of other types of data discussed with reference to FIG. 1, including preloaded reference data 12, unit task organization rules and restrictions 14, and network parameters 16.

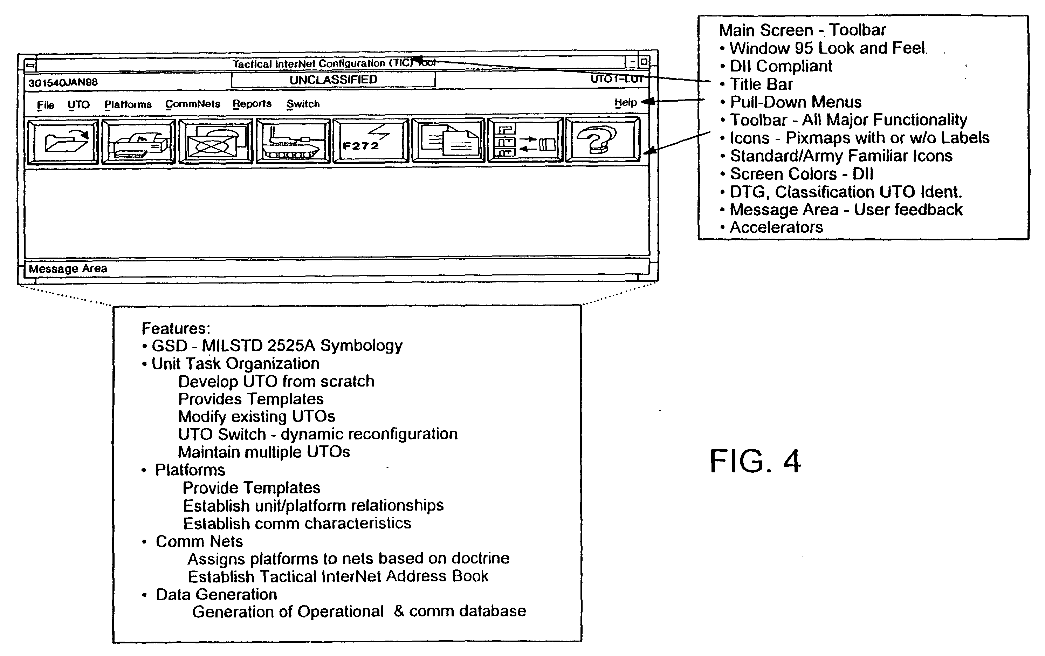

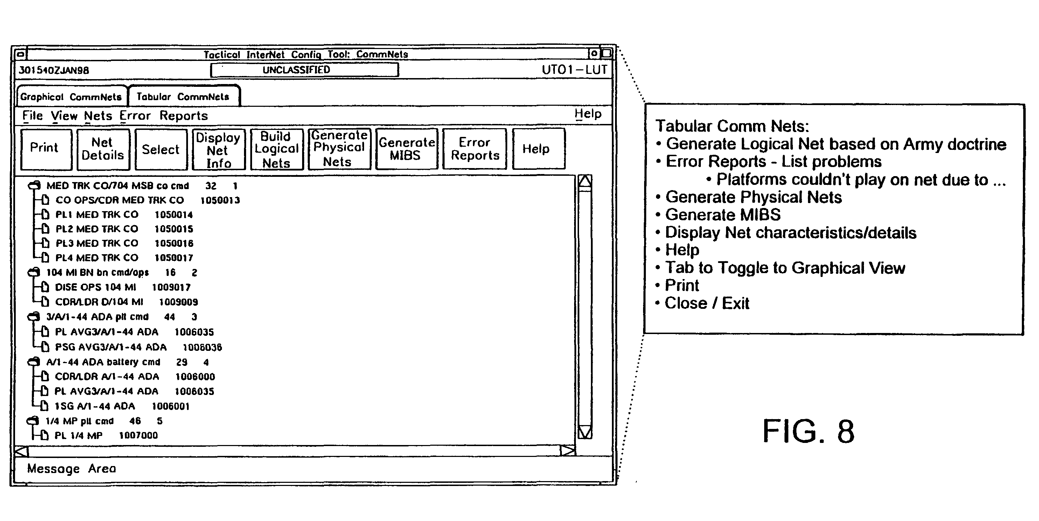

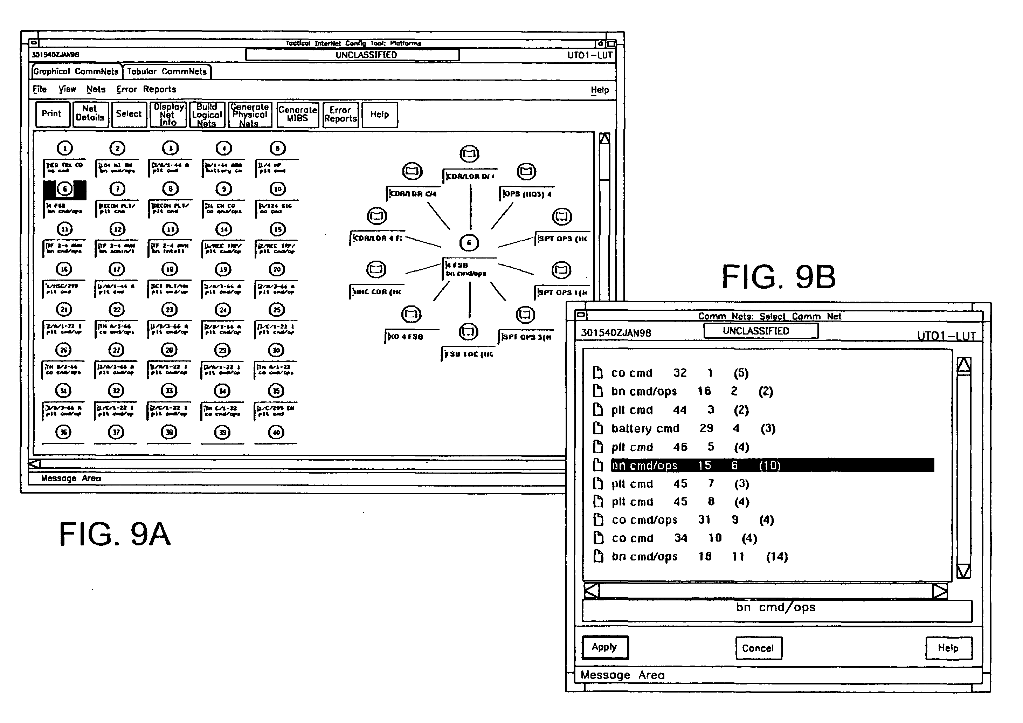

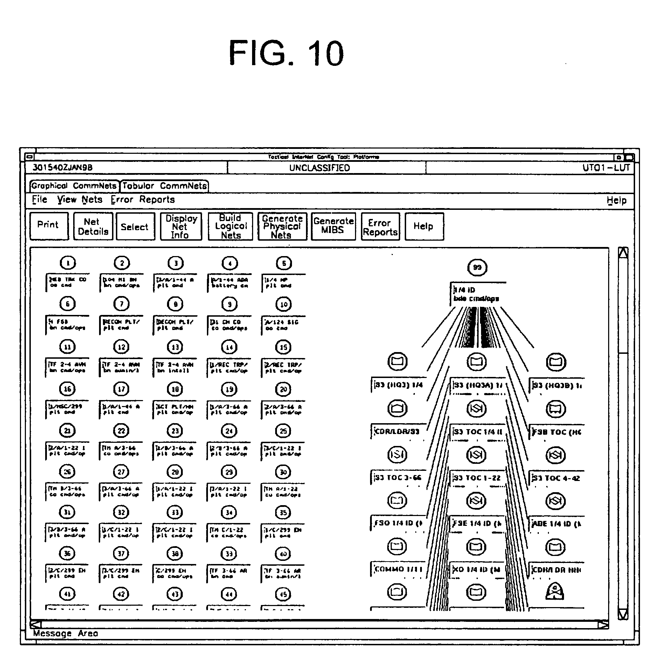

Task organization development is a process in which the user, through the graphical user interface 36, defines or modifies organizational relationships among entities that will be using the network being configured. The graphical interface 36 presents a display in an organization chart format, using names or familiar icons to represent the unit tasks. Central to the user interface 36 is a main menu, depicted in FIG. 4 and having pull-down menus and a "tool bar" of multiple function buttons. Each button uses an icon depicting a function to be performed. In the illustrated screen image, the icons are standard icons that are easily recognizable by personnel familiar with army terminology. As is customary, the purpose of each icon is further explained on the screen when a pointer is positioned over the icon. Network configurations that are contrary to the unit task rules and restrictions are not permitted and appropriate error messages are communicated to the user through the graphical interface 36. The interface 36 allows the user to define new task units and to move existing task units to new positions using a familiar "drag-and-drop" operation with a mouse or similar pointing device. The interface 36 also allows the user to switch between the graphical display and a tabular or "tree" format in which the unit tasks are displayed in a manner analogous to the way file names are displayed in a computer file management utility, showing the same hierarchy as the graphical display but in a more textual format. FIG. 8 shows how the network configuration tool of the invention displays logical communication nets in tabular for the user. FIG. 9A shows a corresponding graphical display of logical communication nets, while FIG. 9B shows a user screen display for selecting a logical net for graphical display. FIG. 10 is a communication net graphical display of a different type.

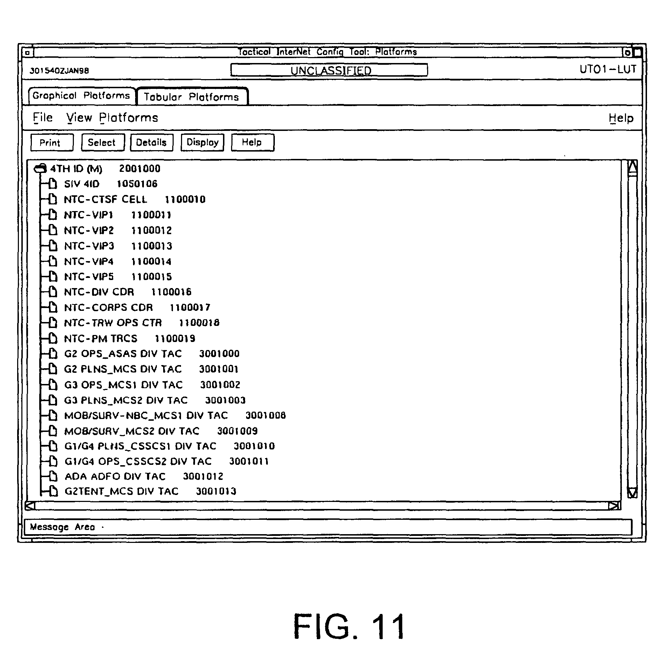

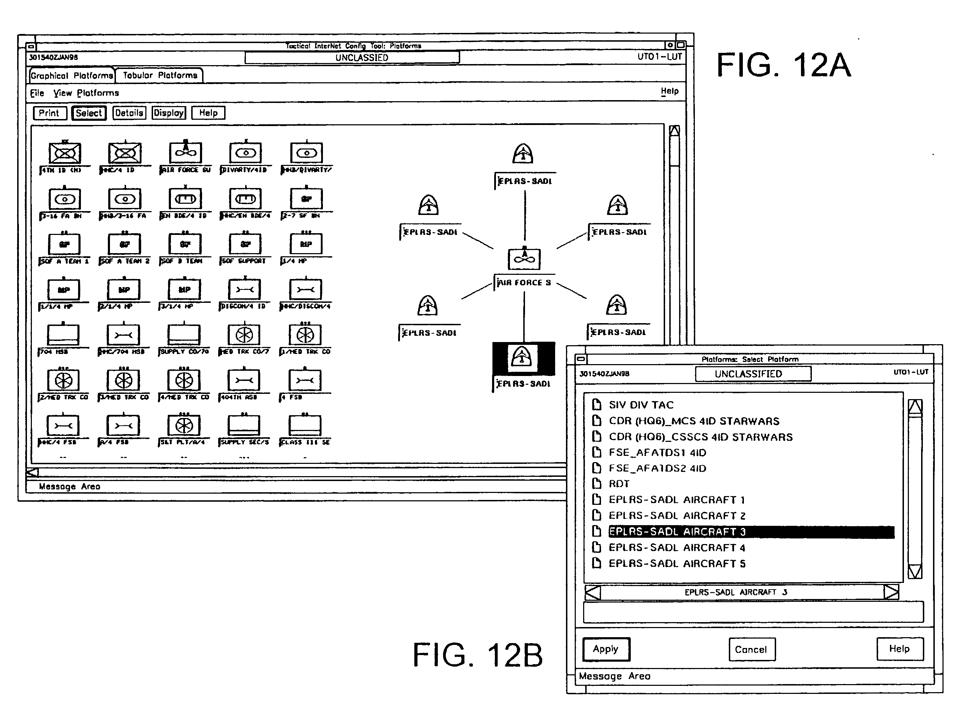

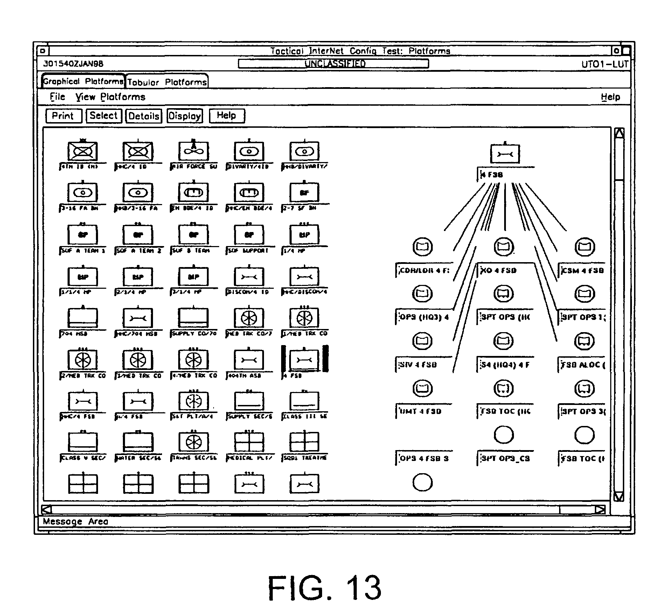

The platform equipment development module 40 performs a similar function for the input and management of platform equipment data. The user interface screen shown in FIG. 11 shows in tabular form the platform equipment data. The screens of FIGS. 12A and 13 show the same information in graphical form, and FIG. 12B shows a platform selection screen. The authorized user can add definitions of new platform equipment and define, or redefine, the relationships between equipment identification numbers and task units or personnel that will using the equipment.

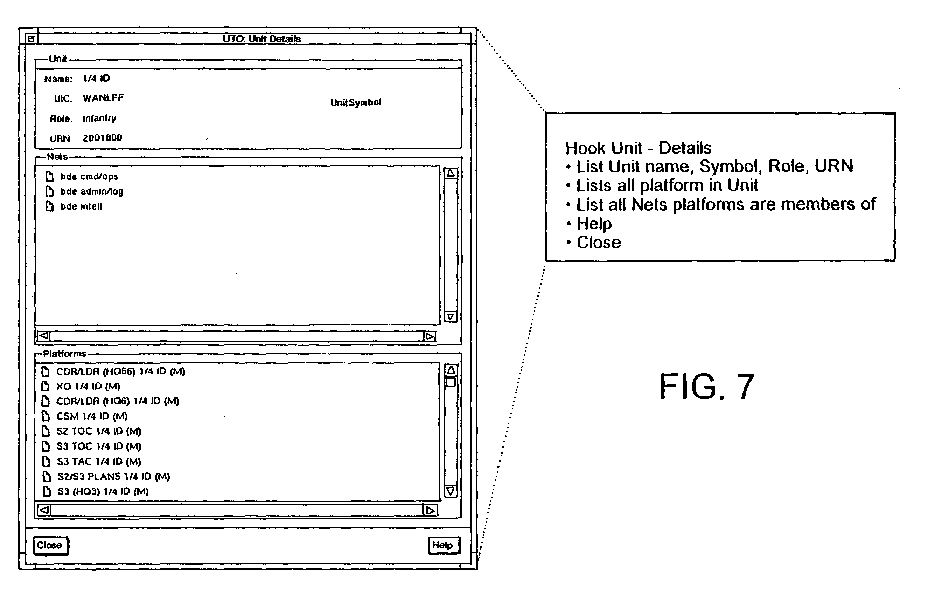

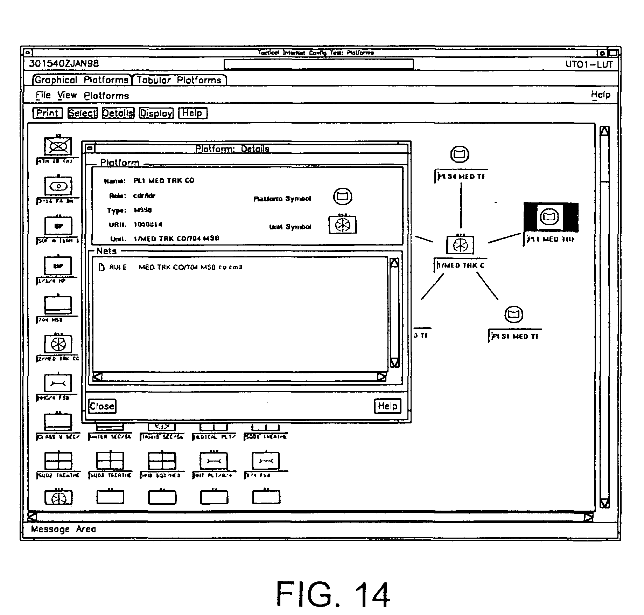

Once there is a task organization and a platform equipment organization in place, the user is ready to configure a logical network, using the logical communication network development module 42 through the graphical user interface 36. The user may establish one or more logical networks, or "nets," through which the various units or entities may communicate. Some units or users may be defined as belonging to more than one network. For example, net membership for an "operational" net may be based on the principal function performed by the net member in relation to the task organization. Assigning a task unit to one or more nets or to one or more platforms is facilitated by the user interface screen shown in FIG. 7. This screen lists the nets and platforms associated with a defined unit. The user interface screen shown in FIG. 14 allows the user to view platforms graphically and to display the details of a selected platform. Net membership of an operational net will generally closely follow the task organization configuration. All entities associated with a single manufacturing division will normally be members of a single net. Similarly, all the task units associated with a single military operation should be members of the same net. If the operation includes contributions from different branches of the armed services, the operational net may include units from these different branches.

Clearly, however, there is almost always a need for multiple overlapping nets based on various other membership criteria. In a business setting, for example, all of the financial personnel in various operational divisions and branches may have a need to communicate directly with each other and with a corporate treasurer or chief financial officer. Similarly, groups of upper management personnel may have a need for a separate communication net. In a military setting, there is also usually a need for communication in overlapping nets distinct from an operational net pertaining to a current military operation. Units responsible for food distribution, for example, need to communicate with each other outside the confines of the operational net. Higher ranking officers may also have a need for an independent communication net.

The function of the logical communication network development module 42 is to permit the authorized user to make configuration changes and additions to the logical communication nets. With this module, the user can define new networks and assign members to those networks. The network configuration tool 10 then converts the logical networks developed in module 42 to physical networks, using a physical communication network development module 44. This module uses all input data pertaining to the network and the desired logical networks, to derive corresponding physical network parameters. Data defining both the logical and physical networks are combined to form a complete network operational database 46. The physical communication network development module 44 also generates management information blocks, as indicated at 48.

In the dissemination phase 32, data from the network operational database 46 are transmitted to the network computers, as indicated in block 50, together with management information blocks 48. Transmission is made in a standard format recognizable by computers in the network, such as the simple network management protocol (SNMP). SNMP was designed to facilitate monitoring of network bridges and routers, but the same protocol is used in the present invention to control and program bridges and routers in accordance with a new configuration.

During dissemination, the networks are still functioning in their prior configurations. In the execution phase 34, the disseminated data are used to condition the network computers, including hosts and routers, to switch configurations at a prearranged time, as indicated in block 52, or upon receipt of a command transmitted over the network. When the command is received, or when the time to switch configurations arrives, the network computers together switch to their new configurations, as indicated in block 54. The new configurations remain effective until the next configuration change is made.

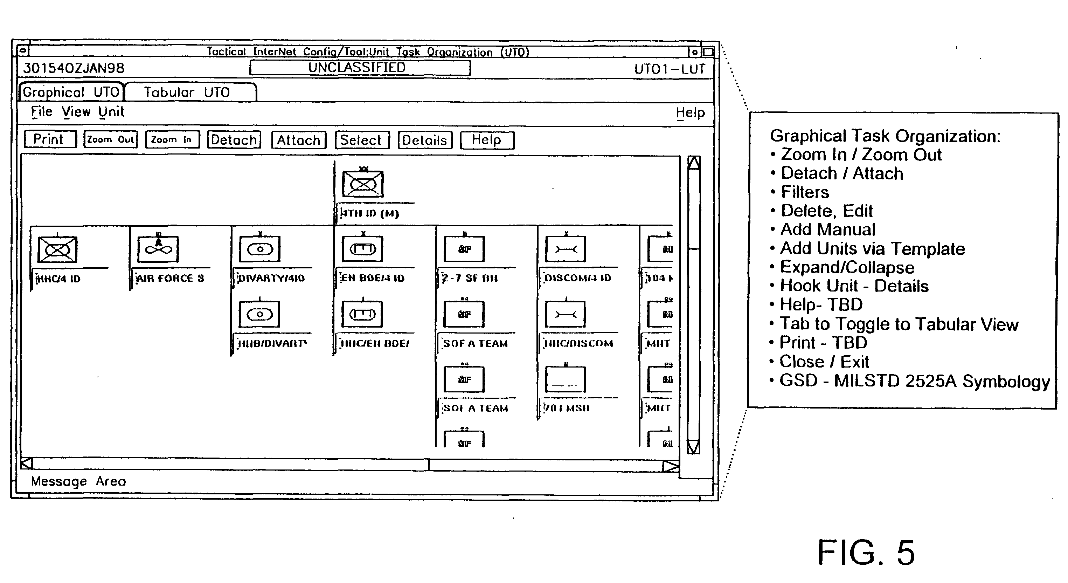

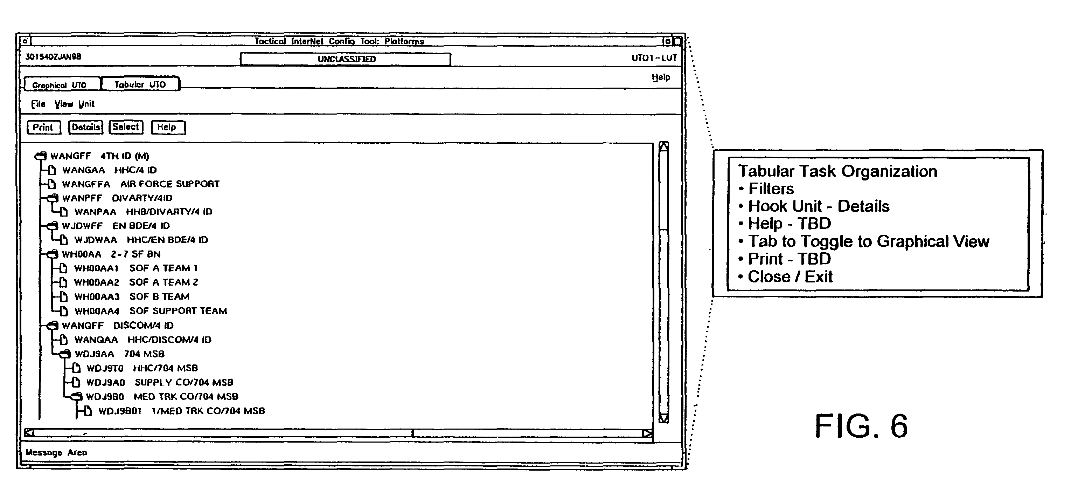

FIG. 3, which comprises FIG. 3A and 3B, shows a process flow sequence through various processing modules of the network configuration engine 10 (FIG. 1) operating in the planning phase of operation. The numerals in circles, #1, #2, #3 and so forth, indicate the approximate processing sequence in the planning phase. As indicated by processing sequence numeral #1, the planning process begins with the task organization development module 38, which establishes a unit task organization (UTO) identification, a unit identification in the form of a name, parent and subordinate identifications, and a definition of the unit's function or role. Unit task organization is mechanized as much as possible by tools that operate in conjunction with the graphical user interface 36. In addition to using icons that represent the units and may be "dragged and dropped" to new locations, the interface facilitates adding new units by providing a unit "template" into which the user merely enters or modifies the appropriate unit parameters. This process employs a user interface screen similar to the one shown in FIG. 5, in which various unit tasks are depicted by icons arranged in an organization matrix, with interconnecting lines indicating the relationships of the tasks. For convenience, the same task organization may be depicted, at the user's option, in tabular form, as indicated in FIG. 6.

As indicated by sequence #2, the task organization development module 38 communicates with an Internet address book development module 60, which maintains a directory of unit reference numbers (URNs). Each unit in a network has a unique URN. The Internet address book development module 30 may also establish multicast and broadcast URNs as the information becomes available.

As indicated by sequence #3, the task organization development module 38 also communicates with the graphical user interface 36 and with the platform equipment development module 40, as depicted in FIGS. 11, 12A, 12B and 13. The latter module 40 establishes a relationship between each unit and the platform on which it functions. The platform is further defined by platform identification, platform type, equipment set identification, equipment elements and the type of unit, such as router, host, radio and so forth. Some of this information is shared with the Internet address book development module 60, as indicated by sequence #4, and there is communication with the graphical user interface 36, as indicated by sequence #5.

The task organization development module 38 also communicates with the logical communication network development module 42, as indicated by sequence #6. The functions of this module include establishing a net identification for each operational net that is defined, establishing each unit's relationship to the operational net, and establishing net membership based on various criteria, using various user interface screens, such as those depicted in FIGS. 8, 9A, 9B and 10. Some of this information is used by the Internet address book development program 60, as indicated by sequence #7, and other information is used by a communication planner database generation module 62, as indicated by sequence #8.

The logical communication network development module 42 also communicates with the graphical user interface 36, as indicated by sequence #9, and communicates, as indicated by sequence #10, with the physical communication network development module 44, shown in FIG. 3B. As previously discussed, this module establishes physical nets based on available hardware and on the desired logical net definitions received from the logical communications network development module 42, as indicated by sequence #11. The physical communications network development module 44 sends data, as indicated by sequence #12, to a communication network engine 62, which establishes logical to physical mapping of the networks, establishes Internet protocol (IP) addressing, and verifies hardware requirements for the networks. The communication engine 62 has an IP-address generation module 64, which provides address data to a position location library generation module 66, as indicated by sequence #13, and to a communication planner database generation module 68, as indicated by sequence #14, which stores physical network data in the communication planner database. The engine 62 also generates an error reporting signal, as indicated at sequence #15, which is coupled back to an error reporting module 26 in FIG. 3A. Any errors reported are reflected in the communications planner database, as indicated by sequence #16.

Steps indicated by sequence #1 through sequence #16 are repeated iteratively until there are no longer any errors to report back. An additional step of operational database generation, indicated in block 72, combines all the database updates made by the communications planner database generation blocks 62 and 68. Finally, as indicated by sequence #17 and #18, respectively, management information blocks are generated, as indicated in block 74, and planning documentation reports are generated, as indicated in block 28.

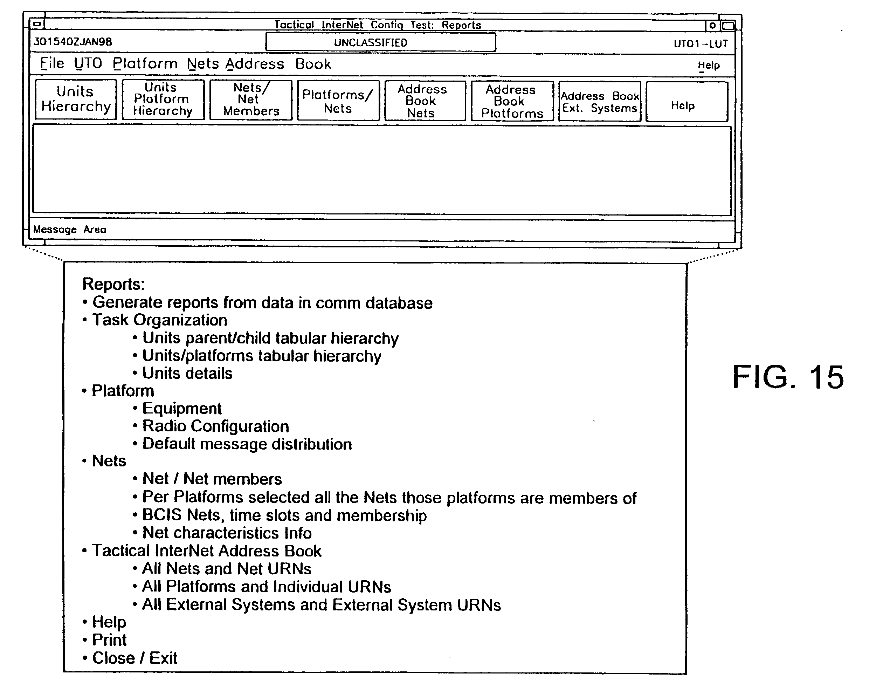

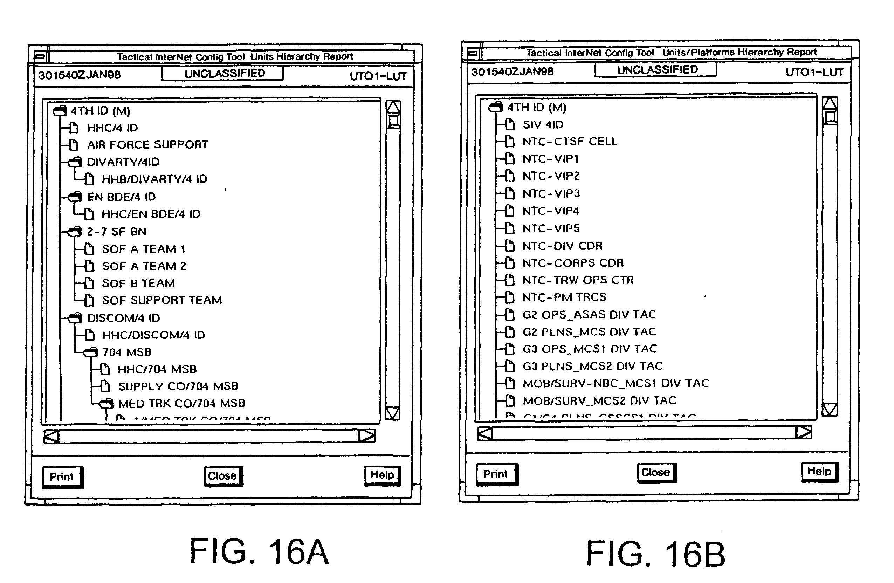

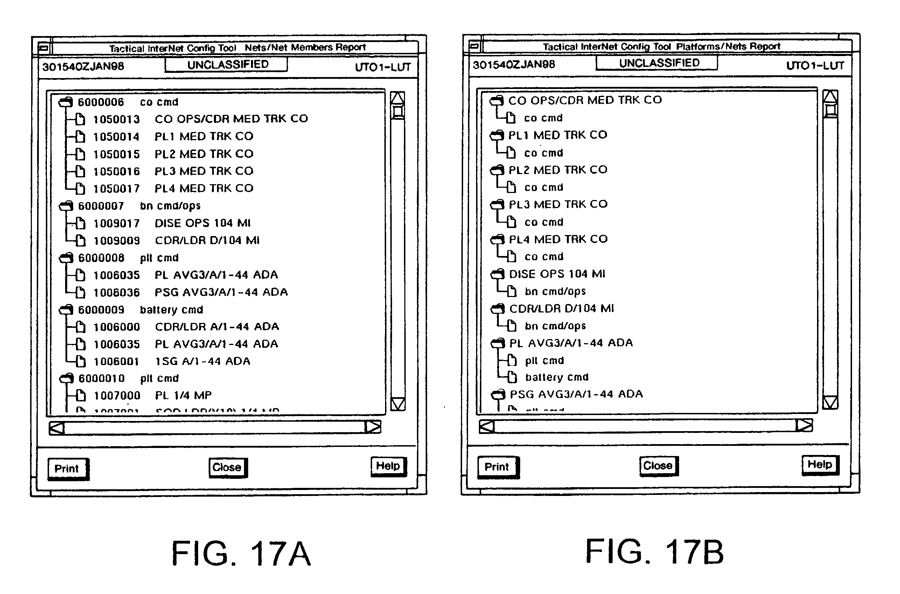

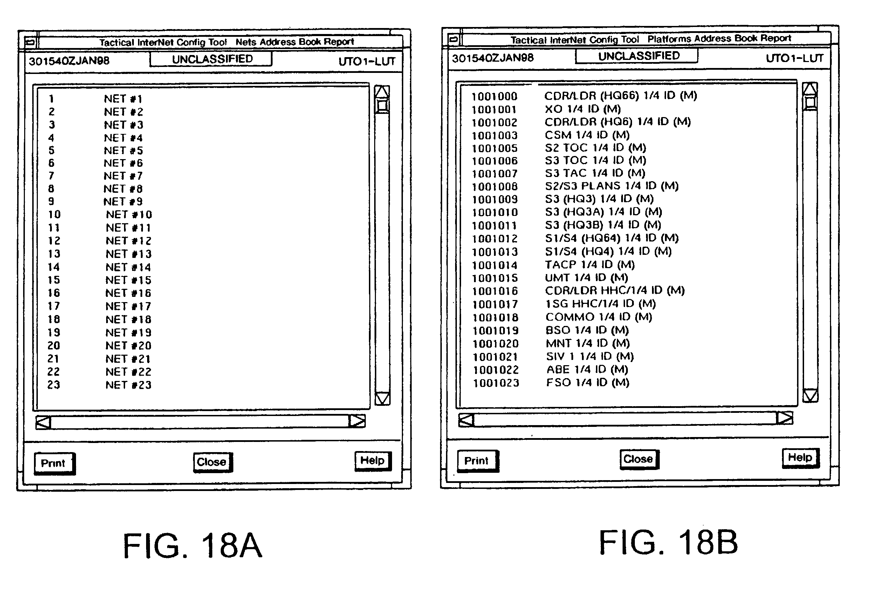

The network configuration tool of the present invention also generates various reports as selected by the user. As shown in the user interface screen of FIG. 15, the reports cover task organization, platforms, communication nets and address books. By way of example, FIGS. 16A and 16B depict a units hierarchy report and a units/platforms hierarchy report. FIGS. 17A and 17B depict a nets/net members report and a platforms/nets report. Finally, FIGS. 18A and 18B depict an address book for nets and an address book for platforms.

It will be appreciated from the foregoing that the present invention represents a significant advance in the field of communication networks. In particular, the invention provides a technique for automating the process of reconfiguration of networks, thereby permitting networks to be reconfigured very much more rapidly than by using conventional manual techniques. It will also be appreciated that, although a specific embodiment of the invention has been illustrated and described, various modifications may be made.
Accordingly, the invention should not be limited except as by the appended claims.

## Claims

1. A method for configuring a communication network of multiple interconnected computers, some of which perform a message routing function, some of which are network computer stations, the method comprising the steps of:
planning a network configuration in simulated form through a graphical user interface (36);
generating network programming data corresponding to a new configuration arrived at in the planning step;
disseminating the network programming data over an existing communication network;
conditioning computers in the network to switch to the new configuration on the occurrence of a triggering signal; and
switching to the new configuration upon occurrence of the triggering signal, wherein the planning step (30) includes:
specifying a task organization that defines functional interrelationships between users of network computer stations;
specifying a platform equipment definition for each network computer station; specifying at least one logical network configuration that defines the interrelationships between network computer stations;
automatically converting the at least one logical network configuration to at least one corresponding physical network configuration; and
automatically generating from the at least one physical network configuration a network operational database (46) that completely defines the network and a plurality of management information blocks (48) containing data to be used to program message routing computers in the network.

2. A method as defined in claim 1, wherein the triggering signal is generated by a clock in each computer and the conditioning step conditions the computers to switch to the new configuration at a prearranged time.

3. A method as defined in claim 1, wherein the triggering signal is generated by a command transmitted to the computers over the network.

4. A method as defined in claim 1, wherein the disseminating step (32) includes:
transmitting the management information blocks (48) over the network to message routing computers to which the blocks (48) pertain.

5. A method as defined in claim 1, wherein the conditioning step is performed in each message routing computer in response to receipt of a management information block (48).

6. A method as defined in claim 1, and further comprising the step of:
generating reports pertaining to the task organization, platform equipment, and logical network configuration defined in the specifying steps, and pertaining to the physical network configuration.

7. A method as defined in claim 1, wherein the planning step (30) further includes:
developing an Internet address book from the data generated during the specifying steps.

8. A method as defined in claim 4, wherein the planning step (30) further includes:
automatically detecting any errors made in the specifying steps;
reporting any detected errors; and
repeating the specifying steps until any detected and reported errors are eliminated.

9. A system for configuring a communication network of multiple interconnected computers, some of which perform a message routing function, some of which are network computer stations the system comprising:
a graphical user interface module (36) facilitating specification of a network by an authorized user;
a network planning module, coupled to the graphical user interface module (36) and functioning to allow the authorized user to define various aspects of a network of computers;
means for generating network programming data corresponding to a new configuration specified in the network planning module;
means for disseminating the network programming data over an existing communication network;
means for conditioning computers in the network to switch to the new configuration on the occurrence of a triggering signal; and
means for switching to the new configuration upon occurrence of the triggering signal, wherein the network planning module indudes:
a task organization development module (38) coupled to the graphical user interface module (36) and functioning to allow the authorized user to define functional interrelationships between users of network computer stations;
a ptatform equipment development module (40) coupled to the graphical user interface module (36) and functioning to allow the authorized user to define equipment parameters for each network computer station;
a logical communication network development module (42) coupled to the graphical user interface module (36) and functioning to allow the authorized user to specify at least one logical network configuration that defines the interrelationships between network computer stations;
means for automatically converting the at least one logical network configuration to at least one corresponding physical network configuration; and
means for automatically generating from the at least one physical network configuration a network operational database (46) that completely defines the network and a plurality of management information blocks (48) containing data to be used to program message routing computers in the network.

10. A system as defined in claim 9, wherein the triggering signal is generated by a clock in each computer and the means for conditioning conditions the computers to switch to the new configuration at a prearranged time.

11. A system as defined in claim 9, wherein the means for switching includes:
means for generating a triggering signal that is transmitted to the computers over the network.

12. A system as defined in claim 9, wherein the means for disseminating includes:
means for transmitting the management information blocks (48) over the network to message routing computers to which the blocks (48) pertain.

13. A system as defined in daim 9, wherein the means for conditioning is located in each message routing computer and operates in response to receipt of a management information block (48).

14. A system as defined in claim 9, and further comprising:
means for generating reports pertaining to the task organization, platform equipment, and logical network configuration defined in the development modules (38, 40, 42), and pertaining to the means (44) for automatically generating a physical network configuration.

15. A system as defined in claim 9, wherein the network planning module further includes:
an Internet address book development module (60) using data generated in the task organization development module (38), the platform equipment development module (40) and the logical communication network development module (42).

16. A system as defined in claim 9, wherein the network planning module further includes:
means for automatically detecting any errors made in the development modules;
means (26) for reporting any detected errors; and
means for repeatedly operating the development modules until any detected and reported errors are eliminated.

## Patentansprüche

1. Verfahren zum Konfigurieren eines Kommunikationsnetzwerks mehrerer miteinander verbundener Computer, von denen einige eine Funktion zum Weiterleiten von Nachrichten ausführen von denen einige Netzwerkcomputerstationen sind,
Planen einer Netzwerkkonfiguration in simulierter Form über eine grafische Benutzerschnittstelle (36),
Erzeugen von Netzwerkprogrammierungsdaten, die einer in dem Planungsschritt erreichten Konfiguration entsprechen,
Verteilen der Netzwerkprogrammierungsdaten über ein existierendes Kommunikationsnetzwerk,
Konditionieren von Computern in dem Netzwerk, um beim Auftreten eines Triggersignals auf die neue Konfiguration umzuschalten, und
Umschalten auf die neue Konfiguration beim Auftreten des Triggersignals, wobei der Planungsschritt (30) aufweist:
Spezifizieren einer Aufgabenorganisation, die funktionale Beziehung zwischen Benutzern von Netzwerkcomputerstationen untereinander definiert;
Spezifizieren einer Plattformausrüstungsdefinition für jede Netzwerkcomputerstation;
Spezifizieren wenigstens einer logischen Netzwerkkonfiguration, die die Beziehung zwischen Netzwerkscomputerstationen untereinander definiert,
Automatisches Umwandeln der wenigstens einen logischen Netzwerkkonfiguration in wenigstens eine entsprechende physikalische Netzwerkkonfiguration, und
Automatisches Erzeugen, aus der wenigstens einen physikalischen Netzwerkkonfiguration, einer Netzwerkbetriebsdatenbasis (46), die das Netzwerk vollständig definiert, und einer Mehrzahl von Managementinformationsblöcken (48), die Daten enthalten, die zum Programmieren von Nachrichten weiterleitenden Computern in dem Netzwerk zu verwenden sind.

2. Verfahren nach Anspruch 1, bei dem das Triggersignal durch einen Taktgeber in jedem Computer erzeugt wird und der Konditionierungsschritt die Computer konditioniert, zu einem vorab festgesetzten Zeitpunkt auf die neue Konfiguration umzuschalten.

3. Verfahren nach Anspruch 1, bei dem das Triggersignal durch einen über das Netzwerk zu den Computern übertragenen Steuerbefehl erzeugt wird.

4. Verfahren nach Anspruch 1, bei dem der Verteilungsschritt ( 32) aufweist:
Übertragen der Managementinformationsblöcke (48) über das Netzwerk zu Nachrichten weiterleitenden Computern, zu denen die Blöcke (48) gehören.

5. Verfahren nach Anspruch 1, bei der Konditionierungsschritt in jedem Nachrichten weiterleitenden Computer in Antwort auf einen Empfang eines Managementinformationsblocks (48) durchgeführt wird.

6. Verfahren nach Anspruch 1, und ferner den Schritt umfassend:
Erzeugen von Berichten, die die in den Spezifizierungsschritten definierte Aufgabenorganisation, Plattformausrüstung und logische Netzwerkkonfiguration betreffen und die die physikalische Netzwerkkonfiguration betreffen.

7. Verfahren nach Anspruch 1, bei dem der Planungsschritt (30) ferner aufweist:
Entwickeln eines Internet-Adressbuchs aus den während der Spezifizierungsschritten erzeugten Daten.

8. Verfahren nach Anspruch 4, bei dem der Planungsschritt (30) ferner aufweist:
Automatisches Detektieren von in den Spezifizierungsschritten gemachten Fehlern,
Berichten jedes detektierten Fehlers, und
Wiederholen der Spezifizierungsschritte, bis alle detektierten und berichteten Fehler beseitigt sind.

9. System zum Konfigurieren eines Kommunikationsnetzwerks mehrerer miteinander verbundener Computer, von denen einige eine Funktion zum Weiterleiten von Nachrichten ausführen, von denen einige Netzwerkcomputerstationen sind, wobei das System umfasst:
ein grafisches Benutzerschnittstellenmodul (36) zum Erleichtern einer Spezifikation eines Netzwerks durch einen autorisierten Benutzer,
ein Netzwerkplanungsmodul, das mit dem grafischen Benutzerschnittstellenmodul (36) verbunden ist und arbeitet, um dem autorisierten Benutzer zu ermöglichen, verschiedene Aspekte eines Netzwerks von Computern zu definieren,
eine Einrichtung zum Erzeugen von Netzwerkprogrammierungsdaten, die einer in dem Netzwerkplanungsmodul spezifizierten, neuen Konfiguration entsprechen,
eine Einrichtung zum Verteilen der Netzwerkprogrammierungsdaten über ein existierendes Kommunikationsnetzwerk,
eine Einrichtung zum Konditionieren von Computern in dem Netzwerk, um beim Auftreten eines Triggersignals auf die neue Konfiguration umzuschalten, und
eine Einrichtung zum Schalten auf die neue Konfiguration beim Auftreten des Triggersignals, wobei das Netzwerkplanungsmodul aufweist:
ein Aufgabenorganisationsentwicklungsmodul (38), das mit dem grafischen Benutzerschnittstellenmodul (36) verbunden ist und arbeitet, um dem autorisierten Benutzer zu ermöglichen, funktionale Beziehungen zwischen Benutzem von Netzwerkcomputerstationen untereinander zu definieren,
einem Plattformausrüstungsentwicklungsmodul (40), das mit dem grafischen Benutzerschnittstellenmodul (36) verbunden ist und arbeitet, um dem autorisierten Benutzer zu ermöglichen, Ausrüstungsparameter für jede Netzwerkcomputerstation zu definieren,
ein Modul (42) zum Entwickeln eines logischen Kommunikationsnetzwerks, das mit dem grafischen Benutzerschnittstellenmodul (36) verbunden ist und arbeitet, um dem autorisierten Benutzer zu ermöglichen, wenigstens eine Iogische Netzwerkkonfiguration zu spezifizieren, die die Beziehungen zwischen Netzwerkcomputerstationen untereinander definiert,
eine Einrichtung zum automatischen Umwandeln der wenigstens einen logischen Netzwerkkonfiguration in wenigstens eine entsprechende physikalische Netzwerkkonfiguration, und
eine Einrichtung zum automatischen Erzeugen, aus der wenigstens einen physikalischen Netzwerkkonfiguration, eine Netzwerkbetriebsdatenbasis (46), die das Netzwerk vollständig definiert, und eine Mehrzahl von Managementinformationsblöcken (48), die Daten enthalten, die zum Programmieren von Nachrichten weiterleitenden Computern in dem Netzwerk zu verwenden sind.

10. System nach Anspruch 9, bei dem das Triggersignal von einem Taktgeber in jedem Computer erzeugt wird und die Einrichtung zum Konditionieren die Computer konditioniert, zu einem vorher festgelegten Zeitpunkt auf die neue Konfiguration zu schalten.

11. System nach Anspruch 9, bei dem die Einrichtung zum Schalten aufweist:
eine Einrichtung zum Erzeugen eines Triggersignals, das über das Netzwerk zu den Computern übertragen wird.

12. System nach Anspruch 9, bei dem die Einrichtung zum Verteilen aufweist:
eine Einrichtung zum Übertragen der Managementinformationsblöcke (48) über das Netzwerk zu Nachrichten weiterleitenden Computern, zu denen die Blöcke (48) gehören.

13. System nach Anspruch 9, bei dem die Einrichtung zum Konditionieren in jedem Nachrichten weiterleitenden Computer angeordnet ist und in Antwort auf einen Empfang eines Managementinformationsblocks (48) arbeitet.

14. System nach Anspruch 9, und ferner umfassend:
eine Einrichtung zum Erzeugen von Berichten, die die in den Entwicklungsmodulen (38, 40, 42) erzeugte Aufgabenorganisation, Plattformausrüstung und logische Netzwerkkonfiguration betreffen und die die Einrichtung (44) zum automatischen Erzeugen einer physikalischen Netzwerkkonfiguration betreffen.

15. System nach Anspruch 9, bei dem das Netzwerkplanungsmodul ferner aufweist:
ein Internet-Adressbuchentwicklungsmodul (60), das die in dem Aufgabenorganisationsentwicklungsmodul (38), dem Plattformausrüstungsentwicklungsmodul (40) und
dem Modul (42) zur Entwicklung eines logischen Kommunikationsnetzwerks erzeugten Daten verwendet.

16. System nach Anspruch 9, bei dem das Netzwerkplanungsmodul ferner aufweist:
eine Einrichtung zum automatischen Detektieren von in den Entwicklungsmodulen gemachten Fehlern,
eine Einrichtung (26) zum Berichten jedes detektieren Fehlers, und
eine Einrichtung zum wiederholten Betreiben der Entwicklungsmodule, bis alle detektieren und berichteten Fehler beseitigt sind.

## Revendications

1. Méthode permettant de configurer un réseau de communication de plusieurs ordinateurs interconnectés dont certains remplissent une fonction de routage de messages et d'autres sont des postes d'ordinateur de réseau, la méthode comprenant les étapes de :
- planification d'une configuration de réseau sous forme de simulation par le biais d'une interface utilisateur graphique (36) ;
- génération de données de programmation de réseau correspondant à une nouvelle configuration obtenue à l'étape de planification ;
- diffusion des données de programmation de réseau via un réseau de communication existant ;
- conditionnement des ordinateurs dans le réseau pour passer à la nouvelle configuration à l'arrivée d'un signal de déclenchement ; et
- passage à la nouvelle configuration à l'arrivée du signal de déclenchement, où l'étape de planification (30) comprend :
- la spécification d'une organisation des tâches définissant des rapports fonctionnels entre des utilisateurs de postes d'ordinateur de réseau ;
- la spécification d'une définition de l'équipement de plateforme pour chaque poste d'ordinateur de réseau ;
- - la spécification d'au moins une configuration logique de réseau définissant les rapports entre des postes d'ordinateur de réseau ;
- la conversion automatique de l'au moins une configuration logique de réseau en au moins une configuration physique correspondante de réseau ; et
- la génération automatique, à partir de l'au moins une configuration physique de réseau, d'une base de données opérationnelle de réseau (46) définissant entièrement le réseau et une pluralité de blocs d'information de gestion (48) contenant des données devant servir à programmer des ordinateurs de routage de messages dans le réseau.

2. Méthode telle que définie à la revendication 1, où le signal de déclenchement est généré par une horloge dans chaque ordinateur et où l'étape de conditionnement conditionne les ordinateurs de manière qu'ils passent à la nouvelle configuration à un moment prédéfini.

3. Méthode telle que définie à la revendication 1, où le signal de déclenchement est généré par une commande transmise aux ordinateurs via le réseau.

4. Méthode telle que définie à la revendication 1, où l'étape de diffusion (32) comprend :
- la transmission des blocs d'information de gestion (48) via le réseau vers des ordinateurs de routage de messages auxquels les blocs (48) se rapportent.

5. Méthode telle que définie à la revendication 1, où l'étape de conditionnement est accomplie dans chaque ordinateur de routage de messages en réponse à la réception d'un bloc d'information de gestion (48).

6. Méthode telle que définie à la revendication 1, et comprenant en outre l'étape de :
- génération de rapports se rapportant à l'organisation des tâches, l'équipement de plateforme, et la configuration logique de réseau définie aux étapes de spécification, et se rapportant à la configuration physique de réseau.

7. Méthode telle que définie à la revendication 1, où l'étape de planification (30) comprend en outre :
- l'élaboration d'un carnet d'adresses Internet à partir des données générées lors des étapes de spécification.

8. Méthode telle que définie à la revendication 4, où l'étape de planification (30) comprend en outre :
- la détection automatique de toute erreur commise lors des étapes de spécification ;
- le signalement de toute erreur détectée ; et
- la répétition des étapes de spécification jusqu'à ce que toute erreur détectée et signalée soit éliminée.

9. Un système permettant de configurer un réseau de communication de plusieurs ordinateurs interconnectés dont certains remplissent une fonction de routage de messages et d'autres sont des postes d'ordinateur de réseau, le système comprenant :
- un module d'interface utilisateur graphique (36) facilitant la spécification d'un réseau par un utilisateur autorisé ;
- un module de planification de réseau, relié au module d'interface utilisateur graphique (36) et fonctionnant de manière à permettre à l'utilisateur autorisé de définir divers aspects d'un réseau d'ordinateurs ;
- un moyen pour générer des données de programmation de réseau correspondant à une nouvelle configuration spécifiée dans le module de planification de réseau ;
- un moyen pour diffuser les données de programmation de réseau via un réseau de communication existant ;
- un moyen pour passer à la nouvelle configuration à l'arrivée du signal de déclenchement, où le module de planification de réseau comprend :
- un module de développement de l'organisation des tâches (38) relié au module d'interface utilisateur graphique (36) et fonctionnant de manière à permettre à l'utilisateur autorisé de définir des rapports fonctionnels entre des utilisateurs de postes d'ordinateur de réseau ;
- un module de développement de l'équipement de plateforme (40) relié au module d'interface utilisateur graphique (36) et fonctionnant de manière à permettre à l'utilisateur autorisé de définir des paramètres d'équipement pour chaque poste d'ordinateur de réseau ;
- un module de développement de réseau de communication logique (42) relié au module d'interface utilisateur graphique (36) et fonctionnant de manière à permettre à l'utilisateur autorisé de spécifier au moins une configuration logique de réseau définissant les rapports entre des postes d'ordinateur de réseau ;
- un moyen pour convertir automatiquement l'au moins une configuration logique de réseau en au moins une configuration physique correspondante de réseau ; et
- un moyen pour générer automatiquement, à partir de l'au moins une configuration physique de réseau, une base de données opérationnelle de réseau (46) définissant entièrement le réseau et une pluralité de blocs d'information de gestion (48) contenant des données devant servir à programmer des ordinateurs de routage de messages dans le réseau.

10. Système tel que défini à la revendication 9, où le signal de déclenchement est généré par une horloge dans chaque ordinateur et où le moyen de conditionnement conditionne les ordinateurs de manière qu'ils passent à la nouvelle configuration à un moment prédéfini.

11. Système tel que défini à la revendication 9, où le moyen de passage comprend :
- un moyen pour générer un signal de déclenchement transmis aux ordinateurs via le réseau.

12. Système tel que défini à la revendication 9, où le moyen de diffusion comprend :
- un moyen pour transmettre les blocs d'information de gestion (48) via le réseau vers des ordinateurs de routage de messages auxquels les blocs (48) se rapportent.

13. Système tel que défini à la revendication 9, où le moyen de conditionnement est situé dans chaque ordinateur de routage de messages et fonctionne en réponse à la réception d'un bloc d'information de gestion (48).

14. Système tel que défini à la revendication 9, et comprenant en outre :
- un moyen pour générer des rapports se rapportant à l'organisation des tâches, l'équipement de plateforme, et la configuration logique de réseau définis dans les modules de développement (38, 40, 42) et se rapportant au moyen (44) de génération automatique d'une configuration physique de réseau.

15. Système tel que défini à la revendication 9, où le module de planification de réseau comprend en outre :
- un module d'élaboration de carnet d'adresses Internet (60) utilisant des données générées dans le module de développement de l'organisation des tâches (38), le module de développement de l'équipement de plateforme (40) et le module de développement de réseau de communication logique (42).

16. Système tel que défini à la revendication 9, où le module de planification de réseau comprend en outre :
- un moyen pour détecter automatiquement toute erreur commise dans les modules de développement ;
- un moyen (26) pour signaler toute erreur détectée ; et
- un moyen pour faire fonctionner les modules de développement de manière répétée jusqu'à ce que toute erreur détectée et signalée soit éliminée.
